# EUROPÄISCHE PATENTSCHRIFT

(11) **EP 3 783 448 B1**
(45) Veröffentlichungstag und Bekanntmachung des Hinweises auf die Patenterteilung: **22.10.2025**
(21) Anmeldenummer: 19192222.8
(22) Anmeldetag: 19.08.2019
(51) Int. Cl.: G05B 19/418

(54) **VERFAHREN ZUR PRÜFUNG EINES PRODUKTIONSPROZESSES ZUR HERSTELLUNG VON BAUTEILEN**
METHOD FOR TESTING A PRODUCTION PROCESS FOR PRODUCING COMPONENTS
PROCÉDÉ DE TESTER D'UN PROCESSUS DE PRODUCTION DESTINÉ À LA FABRICATION DE COMPOSANTS

(43) Veröffentlichungstag der Anmeldung: 24.02.2021
(73) Patentinhaber: GKN Sinter Metals Engineering GmbH, 42477 Radevormwald (DE)
(72) Erfinder: Villgrattner, Thomas, 39042 Brixen (IT); Rier, Gottfried, 39031 Bruneck Dietenheim (IT); Ploner, Meinhard, 39031 Bruneck (IT); Messner, Christina, 39031 Bruneck St. Georgen (IT)
(74) Vertreter: karo IP

(56) Entgegenhaltungen:
- EP-A1- 2 993 541
- EP-A2- 0 826 973
- WO-A1-2004/095154
- DE-B3- 102016 215 624
- US-A1- 2002 183 949
- US-A1- 2018 276 811
- NELSON RODRIGUES ET AL: "Adaptation of functional inspection test plan in a production line using a multi-agent system", INDUSTRIAL ELECTRONICS (ISIE), 2013 IEEE INTERNATIONAL SYMPOSIUM ON, IEEE, 28 May 2013 (2013-05-28), pages 1 - 6, XP032439462, ISSN: 2163-5137, ISBN: 978-1-4673-5194-2, DOI: 10.1109/ISIE.2013.6563786

## Beschreibung

Die vorliegende Erfindung betrifft ein Verfahren zur Steuerung eines Produktionsprozesses, wobei durch den Produktionsprozess Bauteile hergestellt werden.

Während der Produktion von Serienbauteilen werden regelmäßig verschiedene Qualitäts- und Prozessmessungen durchgeführt. Diese Messungen werden in der Regel stichprobenartig durchgeführt. Z. B. kann in gleichmäßigen zeitlichen Abständen an jeweils einer bestimmten Anzahl von Bauteilen ein bestimmtes Merkmal (z. B. ein Gewicht eines sintertechnisch hergestellten Bauteils) erfasst werden. Weitere Messungen betreffen z. B. andere Merkmale des Bauteils, z. B. eine Länge, eine Dichte, eine Parallelität von Oberflächen oder einen Durchmesser des Bauteils. Alternativ dazu oder zusätzlich können in zeitlichen Abständen auch Prozessparameter erfasst werden, etwa der Druckverlauf an einer Maschine während des Pressvorgangs bei der Herstellung sog. Grünlinge.

Durch eine rein statische Festlegung von Prüfintervallen wird auf die sich laufend ändernden Risiken, die sich in einem realen Prozess ergeben, nicht eingegangen. Im Falle von stabilen Prozessen, bei denen Bauteile mit konstant hoher Qualität produziert werden, werden daher meist zu viele Messungen durchgeführt. Dadurch werden vermeidbare Kosten verursacht. Bei instabilen Prozessen hingegen besteht die Gefahr, dass aufgrund einer zu geringen Anzahl von Messungen Fehler nicht hinreichend erkannt werden.

Aus der DE 10 2016 215624 B3 ist ein Verfahren zum Betrieb einer Messeinrichtung bekannt.

Die EP 2 993 541 A1 ist auf ein Verfahren zur Qualitätsbeurteilung eines mittels eines additiven Herstellungsverfahrens hergestellten Bauteils gerichtet.

Die EP 0 826 973 A2 ist auf ein Verfahren zur Prüfung einer Vielzahl von Produkten gerichtet.

Aus der US 2018/276811 A1 sind ein automatisches optisches Inspektionssystem und ein Betriebsverfahren bekannt.

Hiervon ausgehend ist es Aufgabe der vorliegenden Erfindung, die mit Bezug auf den Stand der Technik geschilderten Probleme zumindest zu lindern oder gar zu lösen. Insbesondere soll ein Verfahren zur Steuerung eines Produktionsprozesses zur Herstellung von Bauteilen angegeben werden, bei dem ein Prüfaufwand in Abhängigkeit von einer Stabilität des Produktionsprozesses betrieben wird.

Zur Lösung dieser Aufgaben wird ein Verfahren gemäß den Merkmalen des Patentanspruchs 1 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung ergänzt werden, wobei weitere Beispiele der Erfindung aufgezeigt werden.

Es wird ein Verfahren zur Steuerung eines Produktionsprozesses für Bauteile, also zur Herstellung von Bauteilen, vorgeschlagen. Zumindest die Bauteile oder eine zur Herstellung der Bauteile verwendete Fertigungseinrichtung weisen eine Mehrzahl von messtechnisch erfassbaren Merkmalen (z. B. ein Volumen, ein Gewicht, eine Dichte, eine Parallelität von Oberflächen oder einen Durchmesser des Bauteils; eine Temperatur, einen Druck, eine Leistungsaufnahme der Fertigungseinrichtung) auf. Mindestens ein Merkmal ist als ein Hauptmerkmal und mindestens ein weiteres Merkmal als ein Nebenmerkmal definiert. Das Verfahren weist zumindest die folgenden Schritte auf:
a) Festlegen eines Prüfplans zur Erfassung des mindestens einen Hauptmerkmals und des mindestens einen Nebenmerkmals durch Prüfungen (also z. B. durch eine Messung), wobei zumindest das mindestens eine Hauptmerkmal mit (einem ersten Wert) einer ersten Prüffrequenz und das mindestens eine Nebenmerkmal mit einer zweiten Prüffrequenz gemessen werden; wobei für das mindestens eine Hauptmerkmal zumindest ein Stabilitätskriterium definiert ist;
b) Herstellen der Bauteile und paralleles Durchführen des Prüfplans zur Erzeugung von Prüfergebnissen, wobei (zeitweise) ausschließlich das mindestens eine Hauptmerkmal, in der ersten Prüffrequenz, geprüft wird;
c) Auswerten der ermittelten Prüfergebnisse;
   wobei, wenn mindestens ein Prüfergebnis für das mindestens eine Hauptmerkmal das Stabilitätskriterium verletzt,
d) Fortsetzung der Durchführung des Prüfplans, wobei zumindest auch das mindestens eine Nebenmerkmal geprüft wird.

Vorliegend wird vorgeschlagen, Korrelationen zwischen den verschiedenen Merkmalen eines Bauteils und/oder einer Fertigungseinrichtung zu nutzen. Dafür wird z. B. ein einzelnes Qualitäts- und/oder Prozessmerkmal (oder eine kleine Gruppe) als Hauptmerkmal festgelegt. Dieses Hauptmerkmal kann insbesondere automatisiert und bevorzugt für jedes produzierte Bauteil gemessen werden. Die übrigen Merkmale (Nebenmerkmale) werden insbesondere mit einer deutlich geringeren Prüffrequenz gemessen (also nicht bei allen Bauteilen); im Idealfall selten bis gar nicht.

Insbesondere wird nur ein Hauptmerkmal festgelegt und im Prüfplan aufgenommen.

Aus dem zeitlichen Messwertverlauf des Hauptmerkmals (oder der kleinen Gruppe von Hauptmerkmalen) und aus Korrelationen sämtlicher Merkmale zueinander können insbesondere Prognosen über den Qualitätszustand eines gemessenen Bauteils abgeleitet werden. Führen Verteilungsveränderungen bei dem/den Hauptmerkmal(en) zu einer erhöhten Wahrscheinlichkeit für eine mögliche Toleranzverletzung bei einem oder mehreren der anderen Merkmale des Bauteils, dann werden für diese Merkmale insbesondere (automatisch) zusätzliche Messungen (und, sofern erforderlich, Prozesskorrekturen) eingeleitet. Die Prozessstabilität wird insbesondere ausschließlich mittels des Hauptmerkmals überwacht.

Insbesondere durch den Einsatz von IoT-Techniken (Internet of Things) ist es in modernen Fertigungseinrichtungen möglich, bestimmte Merkmale und deren Prüfergebnisse für jedes einzelne produzierte Bauteil automatisiert zu erfassen und zu speichern. Diese Merkmale können entweder Qualitäts- oder auch Prozessmerkmalen entsprechen. Beispielhaft seien hier ein Gewicht (des Bauteils) oder eine Presskraft (der Fertigungseinrichtung) erwähnt. Dabei ergibt sich insbesondere eine deutlich höhere Messrate (z. B. 15 Messungen pro Minute entsprechend 15 Hub Produktionsgeschwindigkeit), verglichen mit einem klassischen Prüfplan (z.B. 5 Messungen alle zwei Stunden). Es wird damit also insbesondere möglich, Trends für Merkmale über bevorzugt 100 % aller produzierten Bauteile zu erfassen, ohne dass manuelle ("teure") Messungen der Merkmale (z. B. durch Ausschleusen der Bauteile und Durchführung einer Messung in einem nicht zur Fertigungseinrichtung zugehörendem Labor, oder Ähnlichem) nötig sind.

Eine Fertigungseinrichtung kann z. B. eine Pressenvorrichtung, ein Sinterofen oder aber eine komplette Fertigungsanlage mit Pressenvorrichtung und Sinterofen umfassen. Weiter kann eine Fertigungseinrichtung auch z. B. eine Halle umfassen, in der eine Pressenvorrichtung und/oder ein Sinterofen angeordnet sind. Als Merkmale können z. B. auch eine Temperatur der Umgebungsluft, eine Luftfeuchtigkeit oder eine Luftzusammensetzung (Anteile Schutzgas/ Sauerstoff, etc.) erfasst werden.

Insbesondere kann angenommen werden, dass eine minimale Anzahl an Hauptmerkmalen existiert, die direkt mit der Qualität der produzierten Bauteile korrelieren. Weiter kann angenommen werden, dass, falls sich diese minimale Anzahl an Hauptmerkmalen in einem stabilen Gleichgewicht befindet (sich also z. B. kein negativer Trend abzeichnet), keine darüber hinaus gehenden Prüfungen zur Überwachung der Qualität notwendig sind.

Sollten Trendveränderungen von Hauptmerkmalen (z. B. Verletzung von Grenzwerten, nach unten oder oben wegdriften, oszillieren innerhalb der Grenzwerte, atypische Konstellation der Merkmale, Streuungen, ...) zu einer erhöhten Wahrscheinlichkeit für eine Toleranzverletzung (bzw. für eine Verletzung des Stabilitätskriteriums) bezüglich eines oder mehrerer Merkmale führen (man könnte auch sagen: falls eine negative Prognose gestellt wird), sollten (automatisch) zusätzliche Messungen für die betroffenen Merkmale eingeleitet werden.

Die betroffenen Merkmale sind insbesondere die Merkmale, die von der Prognose erfasst sind, wobei die Prognose erstellt wird durch die Beobachtung des mindestens einen Hauptmerkmals.

Bedarfsweise nötige Prozesskorrekturen können insbesondere auf Basis der gesamten Prüfergebnisse (also von Hauptmerkmalen und Nebenmerkmalen) durchgeführt werden. Dabei können nicht nur die Prüfergebnisse der laufenden Produktion von Bauteilen, sondern zusätzlich auch historische Daten früherer Produktionen herangezogen werden.

Ein Produktionsprozess umfasst die Herstellung eines Bauteils, z. B. die sintertechnische Herstellung eines Bauteils. Dabei wird z. B. ein pulverförmiger Werkstoff bereitgestellt, zu einem Grünling verpresst und anschließend sintertechnisch (also thermisch) behandelt. Ggf. kann eine spanende Bearbeitung vorgenommen werden. Im Rahmen des Produktionsprozesses werden insbesondere eine Vielzahl (z. B. mindestens 100, 1.000, oder mehrere 10.000) von zueinander idealerweise identischen Bauteilen hergestellt.

Als zu erfassendes Hauptmerkmal kann z. B. ein Gewicht eines sintertechnisch hergestellten Bauteils erfasst werden, als weiteres Hauptmerkmal oder als Nebenmerkmal z. B. eine Länge, eine Dichte, eine Parallelität von Oberflächen oder ein Durchmesser des Bauteils. Weiter kann als Merkmal auch ein Grat definiert sein oder eine Erscheinung einer Oberfläche des Bauteils, z. B. matt oder glänzend, etc. Ebenso kann ein Merkmal einer Fertigungseinrichtung, z. B. ein anliegender Druck, z. B. Pressdruck (als Hauptmerkmal) oder eine Leistungsaufnahme (z. B. als Nebenmerkmal), erfasst werden.

Ein erster Wert der ersten Prüffrequenz kann z. B. einen Ausgangswert für einen neu gestarteten Produktionsprozess des Bauteils bzw. der Bauteile darstellen. Dieser Wert kann z. B. eine Prüfung an einem Bauteil je 1.000 Bauteile oder eine Prüfung einer Stichprobe von mehreren Bauteilen (z. B. an fünf unmittelbar nacheinander hergestellten Bauteilen) je 1.000 Bauteile oder Ähnliches umfassen. Alternativ oder gleichzeitig kann die erste Prüffrequenz in Abhängigkeit von einem Zeitraum des Produktionsprozesses festgelegt werden. Dann kann z. B. ein Merkmal einer Fertigungseinrichtung erfasst werden, oder eine Prüfung (an einem oder mehreren Bauteilen) je einer Stunde des Produktionsprozesses erfolgen. Ggf. kann dabei die Anzahl von Bauteilen, die in dem Zeitraum produziert wurden bzw. einen festgelegten Bearbeitungsschritt durchlaufen haben, berücksichtigt werden.

Die Prüfergebnisse können aus der Beurteilung jeweils nur eines einzelnen Wertes (des Prüfergebnisses des geprüften Merkmals) oder aber jeweils mehrerer Werte ermittelt sein. Die Auswertung bzw. Beurteilung mehrerer Werte kann sich auf mathematische Methoden stützen, z. B. Mittelwertbildung und/oder die Standardabweichung innerhalb einer Stichprobe.

Ein Stabilitätskriterium kann als eine definierte Abweichung von einem Sollwert für das jeweilige Merkmal festgelegt werden. Dabei muss das Stabilitätskriterium insbesondere nicht einer erlaubten Toleranz (ein Wert außerhalb der Toleranz würde bedeuten, dass z. B. das Bauteil nicht in Ordnung also fehlerhaft wäre) für den Sollwert entsprechen. Insbesondere ist die Toleranz weiter gefasst als das Stabilitätskriterium. Dementsprechend wäre etwa ein Bauteil nicht dann schon fehlerhaft, wenn das erste Merkmal das Stabilitätskriterium verletzt (und damit ggf. noch innerhalb der Toleranz liegt).

Insbesondere kann auch vorgesehen sein, dass eine Verletzung des Stabilitätskriteriums von einer Methode abhängt, mit der z. B. eine während einer Prüfung überprüfte Stichprobe an Bauteilen ausgewertet wird.

Beispielsweise kann eine Anzahl als Teilmenge der Bauteile einer Stichprobe (die Stichprobe umfasst z. B. fünf Bauteile) definiert sein, ab der auf Verletzung des Stabilitätskriteriums erkannt wird. Es müssen also eine Mindestanzahl an Bauteilen einer Stichprobe (also z. B. mindestens zwei Bauteile der Stichprobe von fünf Bauteilen) z. B. eine bestimmte Mindestabweichung von einem Nennwert des ersten Merkmals aufweisen, wobei erst dann auf eine Verletzung des Stabilitätskriteriums erkannt wird.

Über die Verletzung des Stabilitätskriteriums wird insbesondere eine Prozessinstabilität erkennbar, so dass durch einen korrigierenden Eingriff in den Produktionsprozess ein mögliches bevorstehendes Nichteinhalten der Toleranz verhindert werden kann.

Das Stabilitätskriterium kann z. B. auf ein Maß einer Veränderung eines Prüfergebnisses gerichtet sein. Insbesondere kann, wenn sich bei den Prüfergebnissen ein Trend oder eine, ggf. sporadisch, auftretende sprunghafte Veränderung einstellt, auf eine Verletzung des Stabilitätskriteriums entschieden werden.

Insbesondere wird das Herstellen der Bauteile und das Durchführen des Prüfplans, also die Durchführung von Messungen des ersten Merkmals, zeitlich parallel zueinander durchgeführt.

Insbesondere umfasst die erste Prüffrequenz eine Prüfung von mindestens 50 % der Bauteile (d. h. das betreffende Merkmal des Bauteils oder der Fertigungseinrichtung wird für mindestens 50 % aller Bauteile überprüft), bevorzugt mindestens 75 %, besonders bevorzugt 100 %.

Insbesondere weicht die zweite Prüffrequenz von der ersten Prüffrequenz ab, wobei die zweite Prüffrequenz geringer oder sogar deutlich geringer ist als die erste Prüffrequenz. Bevorzugt umfasst die zweite Prüffrequenz, dass in Summe insbesondere höchstens 50 % (bevorzugt höchstens 20 %, besonders bevorzugt höchstens 5 %) einer Anzahl von Prüfungen, die infolge der ersten Prüffrequenz durchgeführt werden, durchgeführt werden. Insbesondere wird zeitweise nur das mindestens eine Hauptmerkmal überprüft, wobei in deutlich geringerer zweiter Prüffrequenz (kontinuierlich und dabei die erste Prüffrequenz überlagernd) das mindestens eine Nebenmerkmal überprüft wird.

Bevorzugt umfasst die zweite Prüffrequenz eine Prüfung von 0 % der Bauteile und es wird erst dann eine Prüfung von mindestens einem Nebenmerkmal aufgenommen, wenn ein Stabilitätskriterium des mindestens einen Hauptmerkmals verletzt wurde.

Insbesondere wird zumindest ein (bevorzugt nur ein) Hauptmerkmal bei einem oder mehreren Prozessschritten in der ersten Prüffrequenz erfasst. Falls es sich für eine vorher definierte Zeit innerhalb vorher definierter Grenzwerte befindet (also das Stabilitätskriterium nicht verletzt wird), werden insbesondere keine darüber hinaus gehenden Prüfungen bzw. Messungen durchgeführt. Sollten die Grenzwerte des Stabilitätskriteriums verletzt werden, werden insbesondere alle Merkmale gemäß Prüfplan erfasst und geprüft.

Insbesondere ist das einzelne Hauptmerkmal z. B. das Gewicht eines Bauteils. Insbesondere wird zumindest das eine Hauptmerkmal im Rahmen der Herstellung des Bauteils automatisiert geprüft. Im Fall des Gewichts eines Bauteils kann insbesondere die betreffende Anzahl an Bauteilen gewogen werden. Im Fall eines Drucks/Pressdrucks kann z. B. der von der Fertigungseinrichtung aufgebrachte Druck für die betreffende Anzahl an Bauteilen erfasst werden.

Insbesondere können als Auslöser zur Durchführung zusätzlicher bzw. aller Messungen laut Prüfplan (zusätzlich) Änderungen in der Variabilität bzw. der Verteilungseigenschaften der Prüfergebnisse des mindestens einen Hauptmerkmals herangezogen werden.

Insbesondere liegt zumindest eine Mehrzahl von Nebenmerkmalen vor, wobei die Verletzung eines Stabilitätskriteriums eines Hauptmerkmals die Prüfung nur einer Auswahl der Nebenmerkmale bedingt. Insbesondere werden also nicht alle im Prüfplan identifizierten Nebenmerkmale geprüft, sondern nur eine Auswahl der Nebenmerkmale. Insbesondere kann sukzessive eine Prüfung weiterer Nebenmerkmale oder eine Änderung der Auswahl erfolgen.

Insbesondere liegt eine Mehrzahl von Hauptmerkmalen vor (z. B. Gewicht und Oberflächenfarbe des Bauteils), wobei die Verletzung eines Stabilitätskriteriums eines Hauptmerkmals (z. B. Gewicht) die Prüfung einer ersten Auswahl der Nebenmerkmale (z. B. Länge, Breite des Bauteils; Druck der Fertigungseinrichtung) und die Verletzung eines Stabilitätskriteriums eines anderen Hauptmerkmals (z. B. Oberflächenfarbe) die Prüfung einer zweiten Auswahl der Nebenmerkmale (z. B. Zusammensetzung der Ausgangsstoffe für das Bauteil, Temperatur in der Fertigungseinrichtung, Druck der Fertigungseinrichtung) bedingt.

Insbesondere umfasst die Verletzung eines Stabilitätskriteriums zumindest einen der folgenden Zustände:
- die Prüfergebnisse folgen einem Trend (steigen oder fallen kontinuierlich);
- die Prüfergebnisse schwanken innerhalb eines Intervalls, dass durch das Stabilitätskriterium definierte Grenzwerte überschreitet;
- die Prüfergebnisse zumindest unterschiedlicher Hauptmerkmale weichen von einer vordefinierten Korrelation der Hauptmerkmale (z. B. hängen Gewicht und Volumen bzw. Höhe, Länge, Breite; bzw. Gewicht und Druck voneinander ab) ab.

Insbesondere kann bei sich ändernden Prüfergebnissen (z. B. bei Vorliegen eines Trends oder bei sprunghafter Änderung oder bei Auftreten zu großer Intervalle) des Hauptmerkmals oder der Hauptmerkmale eine Überprüfung weiterer (oder aller) im Prüfplan angeführten Merkmale, die im Prüfplan definiert sind, eingeleitet werden. Insbesondere werden nur für jene Merkmale, deren Prüfergebnisse die angeführten Eigenschaften aufweisen die betreffenden Prüffrequenzen erhöht.

Insbesondere kann bei sich ändernden Prüfergebnissen (z. B. bei Vorliegen eines Trends oder bei sprunghafter Änderung oder bei Auftreten zu großer Intervalle) des Hauptmerkmals oder der Hauptmerkmale nur eine Auswahl von Merkmalen (also nicht alle Merkmale aus dem Prüfplan) überprüft werden. Die Auswahl von Merkmalen kann insbesondere von Fachleuten festgelegt werden. Ggf. kann die Auswahl in jedem Fall neu getroffen werden oder alternativ im Prüfplan als feste Auswahl hinterlegt sein.

Zu Beginn eines Herstellungsprozesses von Bauteilen könnte z. B. das Gewicht der produzierten Bauteile durchgehend erfasst werden und als Hauptmerkmal betrachtet werden. In einem weiteren Schritt könnten weitere Hauptmerkmale hinzugefügt werden oder anstelle der bis dahin benutzten Hauptmerkmale treten. Denkbar als weitere Hauptmerkmale wären z. B. etwa eine Presskraft bzw. ein von der Fertigungseinrichtung auf das Bauteil applizierter Druck, oder aber auch einzelne Abmessungen der produzierten Bauteile.

Insbesondere wird zumindest die erste Prüffrequenz verändert, wobei
- (entweder) die erste Prüffrequenz gesteigert wird, wenn mindestens ein Prüfergebnis für das mindestens eine Hauptmerkmal das Stabilitätskriterium verletzt; oder
- die erste Prüffrequenz verringert wird, wenn sich eine bestimmte Anzahl von aufeinanderfolgenden Prüfergebnissen zumindest des mindestens einen Hauptmerkmals im Einklang mit dem Stabilitätskriterium befinden.

Insbesondere wird die erste Prüffrequenz (die dem mindestens einen Hauptmerkmal bzw. allen Hauptmerkmalen zugeordnet ist) verändert, also der erste Wert der ersten Prüffrequenz auf einen anderen zweiten Wert der ersten Prüffrequenz eingestellt. Dabei wird die erste Prüffrequenz gesteigert, wenn z. B. mindestens ein Prüfergebnis für das mindestens eine Hauptmerkmal das Stabilitätskriterium verletzt. Andererseits wird die erste Prüffrequenz verringert, wenn sich alle Prüfergebnisse im Einklang mit dem Stabilitätskriterium befinden.

Hier wird also vorgeschlagen, dass wenn der Produktionsprozess stabil läuft (und die Prüfergebnisse zumindest zum mindestens einen Hauptmerkmal keine größere Abweichung aufweisen, also Prüferergebnisse im Einklang mit dem Stabilitätskriterium sind), die erste Prüffrequenz reduziert werden kann.

Wenn eine mögliche Instabilität des Produktionsprozesses erkannt wird (d. h. z. B. mindestens ein Prüfergebnis zumindest zum mindestens einen Hauptmerkmal weist eine größere Abweichung auf, das Prüferergebnis verletzt also das Stabilitätskriterium), kann die erste Prüffrequenz gesteigert werden.

Der Fachmann wird beispielweise eine sogenannte Eingriffsgrenze, eine Toleranzgrenze, oder eine Stabilitätsgrenze zur Definition eines Stabilitätskriteriums heranziehen. Liegen also die Prüfergebnisse des zu prüfenden Merkmals innerhalb der definierten Grenzen, wird die Prüffrequenz sukzessive reduziert.

Im umgekehrten Fall wird die Prüffrequenz erhöht, sobald die Prüfergebnisse des zu prüfenden Merkmals außerhalb definierter Grenzen liegen, da diese Grenzüberschreitung ein höheres Qualitätsrisiko für das Bauteil anzeigt.

Unter stabilen Bedingungen des Produktionsprozesses können Messungen von zu prüfenden Merkmalen damit auf ein Minimum reduziert und dennoch eine hohe Güte der produzierten Bauteile garantiert werden.

Insbesondere auf Basis von einer computergestützten Messwerterfassung und Messwertregistrierung können Prüfergebnisse laufend analysiert und dahingehend beurteilt werden, ob der Produktionsprozess stabil ist oder ob Eingriffe in den Produktionsprozess erforderlich sind.

Auf Basis der durchgeführten Messungen und der daraus resultierenden Prüfergebnisse ist es insbesondere möglich, einen Trend in der Veränderung eines Merkmals (z. B. ein Gewicht oder eine Höhe) zu erfassen. Falls die Prüfergebnisse über einen definierten Zeitraum oder über eine bestimmte Anzahl von Stichproben hinweg innerhalb definierter Grenzwerte liegen (das Stabilitätskriterium erfüllen), kann daraus geschlossen werden, dass der Prozess für das betroffene geprüfte Merkmal stabil verläuft und die Prüffrequenz daher reduziert werden. Diese Reduzierung kann auch stufenweise erfolgen und im Idealfall kann die Prüffrequenz auf ein definiertes Minimum gesetzt werden.

Sollten jedoch bei einer Prüfung ein oder mehrere Prüfergebnisse mindestens ein Stabilitätskriterium verletzen, deutet dies auf einen instabilen Produktionsprozess hin und die Prüffrequenz wird erhöht bzw. weitere Merkmale (Hauptmerkmale und/oder Nebenmerkmale) werden überprüft und damit der Produktionsprozess stärker überwacht. Parallel kann ein Eingriff in den Produktionsprozess durchgeführt werden, um die Prozessstabilität wiederherzustellen, einschließlich der Ausschleusung mutmaßlich fehlerhafter Bauteile. Die höhere Prüffrequenz bzw. die Prüfung weiterer Merkmale gewährleistet, dass der Produktionsprozess für einen definierten Zeitraum stärker überwacht wird. Erst wenn die Prüfergebnisse über einen definierten Zeitraum oder über eine bestimmte Anzahl von Stichproben bzw. Bauteilen hinweg das mindestens eine Stabilitätskriterium erfüllen, kann die Prüffrequenz und/oder die Anzahl überwachter Merkmale wieder (stufenweise) reduziert werden.

Insbesondere sind zumindest Hauptmerkmale (ggf. zusätzlich Nebenmerkmale) durch ein Modell miteinander verknüpft, wobei anhand von Prüfergebnissen zumindest eines Hauptmerkmals auf eine Veränderung von anderen Hauptmerkmalen oder Nebenmerkmalen unter Berücksichtigung des Modells geschlossen wird. Eine Prüfung zumindest eines dieser Hauptmerkmale oder Nebenmerkmale wird initialisiert, sobald die Verletzung eines diesem Merkmal zugeordneten Stabilitätskriterium prognostiziert wird.

Beispielsweise kann eine kontinuierliche Zunahme des Gewichts eines Bauteils als Grundlage für eine Prognose verwendet werden. Gemäß der Prognose könnte eine zukünftige Verletzung eines Stabilitätskriteriums vorhergesagt werden. Bereits anhand dieser Prognose könnten Prüfungen weiterer Merkmale eingeleitet werden, so dass ggf. frühzeitig (ggf. vor Verletzung eines Stabilitätskriteriums) korrigierend in einen Fertigungsprozess eingegriffen werden kann.

Insbesondere können Sensitivitäts- und Abhängigkeitsanalysen durchgeführt werden. Darauf basierend können sowohl die Hauptmerkmale als auch deren Einfluss auf die restlichen (Neben-)Merkmale identifiziert werden. Mit diesen Analysen soll insbesondere ebenfalls bestimmt werden, mit welcher Prüffrequenz die Hauptmerkmale erfasst werden müssen, ob etwa hochfrequent (z. B. 100% der Bauteile) oder vielleicht nur durch periodische Messungen mit fixem Zeit- und/oder Produktionsintervall. Insbesondere sind abgeleitete Hauptmerkmale vorgesehen, die nicht direkt messbar sind, sondern insbesondere aus mehreren gemessenen Merkmalen berechnet werden können. Ein Beispiel ist z. B. die Dichte eines Bauteils, berechnet aus gemessenem Gewicht und dem Volumen (welches wiederum z. B. aus der gemessenen Bauteilhöhe abgleitet wird).

Insbesondere wird ein Modell erstellt, das aus den Werten der Hauptmerkmale die Verteilung der Werte der restlichen Merkmale schätzen kann. Das Modell basiert insbesondere auf den vorstehend genannten Sensitivitäts- und Abhängigkeitsanalysen. Messungen von Merkmalen werden insbesondere automatisch eingeleitet, falls eine erhöhte Wahrscheinlichkeit für eine prognostizierte Toleranzverletzung bzw. Verletzung eines Stabilitätskriteriums von einem oder mehreren Merkmalen berechnet wird, oder falls das Prognoseintervall (misst die Unsicherheit) eines geschätzten Merkmales zu groß wird. Die Prüfergebnisse, welche die automatisch eingeleiteten Messungen liefern, werden insbesondere genutzt, um das Modell zu validieren und/oder
online (in Echtzeit) zu verbessern.

Insbesondere wird das Modell anhand der durchgeführten Prüfungen und der Prüfergebnisse fortlaufend validiert und verändert.

Ein Validierungszustand des Modells, ausgedrückt insbesondere in der binären Unterscheidung (Stufung) "gut" oder "schlecht" kann mit dem allgemein bekannten Begriff Modellgüte derart verknüpft sein, dass eine als nicht in einer definierten Bandbreite liegend ermittelte Modellgüte dem Zustand einer Verletzung eines Stabilitätskriteriums gleichkommt.

Automatisch eingeleitete Messungen bzw. Prüfungen werden insbesondere nicht nur dazu genutzt, um das Modell zu validieren, sondern auch zu dessen Erweiterung. Z. B. kann Merkmalen, die gemessen werden, ein höheres Vertrauen ausgesprochen werden, als Merkmalen, die nur geschätzt werden. Die infolge der automatischen Einleitung gemessenen Merkmale können somit zeitweise zu Hauptmerkmalen werden, welche wiederum dazu genutzt werden können, weiter gehende Messungen einzuleiten, bzw. vorhandene Messungen zu ersetzen.

Insbesondere wird durch das Modell für die Auswahl des zusätzlich zu prüfenden Hauptmerkmals oder Nebenmerkmals zumindest einer der folgenden Faktoren berücksichtigt:
- Kosten der zusätzlichen Prüfung;
- Zeitaufwand der zusätzlichen Prüfung;
- Verfügbarkeit der erforderlichen Messeinrichtung.

Insbesondere werden bei einem automatischen Einleiten der Messungen bzw. Prüfungen die Rahmenbedingungen dieser Messungen (ebenfalls) im Modell abgebildet, mit dem Ziel, immer die günstigsten Messungen zu nutzen. Z. B. werden der Aufwand, die Kosten, die Dauer, eine Auslastung des Messsystems, die Verlässlichkeit der Messung, usw. mit modelliert und bei der Auswahl der Messungen berücksichtigt.

Insbesondere werden die zusätzlich eingeleiteten Messungen bzw. Prüfungen gezielt ausgewertet. Eine mehrfache Einleitung kann etwa auf systematische bzw. "schleichend auftretende" Fehler in Prozessen und/oder Maschinen/Werkzeugen hinweisen. Diese Fehler müssen erkannt und anschließend beseitigt werden. Denkbar sind zudem dynamische Anpassungen der Wartungsintervalle von Anlagen, basierend auf der Häufigkeit von Merkmalsmessungen.

Insbesondere können für jedes neue Produkt bzw. jeden neuen Prozess die Hauptmerkmale und die Abhängigkeiten (zu anderen Merkmalen) neu identifiziert werden. Um jedoch diesen Aufwand zu reduzieren, können insbesondere Klassen von Produkten/Prozessen ermittelt werden, in denen ähnliches Verhalten/Anforderungen vorliegen. Hierzu können die bereits vorhandenen Messwerte (z.B. aus Qualitäts-, Prozess- und Maschinendaten) z.B. nach Musterähnlichkeit in den Abweichungen ausgewertet werden.

Weiterhin können Abhängigkeiten zwischen diesen Mustern und den zu produzierenden Bauteileigenschaften (z.B. Größe, Gewicht, Geometrie, Dichte, ...) hergestellt werden. Durch Vergleich eines neu zu produzierenden Bauteils mit bereits produzierten Bauteilen kann damit eine geeignete Basismodellklasse (die die empfohlenen Prüfungen definiert) für das neue Bauteil vorgeschlagen werden.

Insbesondere sind die zu erarbeitenden Basismodelle zunehmend generisch. Einmal ermittelt, sind sie insbesondere recht einfach auf verschiedene neue Produkte und/oder Prozesse anpassbar. Dafür können zu Beginn einer neuen Produktion vermehrt Messungen durchgeführt werden. Die Modellparameter und die zugehörigen Konfidenzintervalle können insbesondere automatisiert angepasst werden. Sobald ein vorher definiertes Stabilitätskriterium erreicht ist, kann das Modell scharf geschaltet (und für das Verfahren verwendet) werden, wobei Messungen bzw. Prüfungen danach nur mehr nach Bedarf durchgeführt werden.

Das Stabilitätskriterium könnte beispielhaft aus den Hauptmerkmalen und den Konfidenzintervallen der restlichen Merkmale berechnet werden. Konkretes Beispiel für den "Gutfall" (d. h. für den Fall eines funktionierenden Modells): Die Hauptmerkmale verhalten sich "unauffällig" und die Konfidenzintervalle befinden sich für eine vorab definierte Zeit innerhalb vorab definierter Grenzwerte.

Insbesondere wird der Prüfplan für ein herzustellendes Bauteil während der Herstellung des Bauteils zumindest teilweise automatisiert erstellt, indem anhand von Prüfergebnissen von Merkmalen zumindest ein Hauptmerkmal und ein Nebenmerkmal identifiziert werden.

Insbesondere kann zur Validierung des Prüfplans zusätzlich zu der Prüfung des identifizierten zumindest einen Hauptmerkmals periodisch eine Mehrzahl von anderen Merkmalen geprüft werden.

Insbesondere werden zusätzlich zu den Prüfergebnissen am Ende einer Produktion z. B. die Modellparameter, das Verhalten der Parameter und Merkmale während des Lernvorgangs und die Anzahl und Art der (automatisch) eingeleiteten Messungen bzw. Prüfungen, usw. abgespeichert. Diese Informationen können bei der nächsten Produktion insbesondere automatisch in das gelernte Modell mit einfließen und können so dessen Performance sukzessive verbessern.

Insbesondere kann basierend auf der Auswertung der (automatisch) eingeleiteten Messungen bzw. Prüfungen über alle Produkte und Prozesse hinweg die Notwendigkeit der Automatisierung von Messungen abgeleitet werden.

Insbesondere umfasst die Herstellung des Bauteils eine Mehrzahl von Prozessschritten, wobei ein Merkmal nach einem ersten Prozessschritt vorliegt und geprüft wird und wobei (ein messtechnisch erfassbares) weiteres Merkmal nach einem, dem ersten Prozessschritt zeitlich nachfolgenden zweiten Prozessschritt vorliegt.

Es wird weiter eine Vorrichtung zur Datenverarbeitung vorgeschlagen, umfassend einen Prozessor, der so konfiguriert ist, dass er das beschriebene Verfahren durchführt.

Vorsorglich sei angemerkt, dass die hier verwendeten Zahlwörter ("erste", "zweite", "dritte", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

## Patentansprüche

1. Verfahren zur Steuerung eines Produktionsprozesses für Bauteile, wobei zumindest die Bauteile oder eine zur Herstellung der Bauteile verwendete Fertigungseinrichtung eine Mehrzahl von messtechnisch erfassbaren Merkmalen aufweisen, wobei mindestens ein Merkmal als Hauptmerkmal und mindestens ein weiteres Merkmal als Nebenmerkmal definiert ist; zumindest aufweisend die folgenden Schritte:
a) Festlegen eines Prüfplans zur Erfassung mindestens eines Hauptmerkmals und mindestens eines Nebenmerkmals durch Prüfungen, wobei das mindestens eine Hauptmerkmal mit einer ersten Prüffrequenz und das mindestens eine Nebenmerkmal mit einer zweiten Prüffrequenz gemessen werden; wobei für das mindestens eine Hauptmerkmal und das mindestens eine Nebenmerkmal jeweils zumindest ein Stabilitätskriterium definiert ist; wobei das Stabilitätskriterium als eine definierte Abweichung von einem Sollwert für das jeweilige Merkmal festgelegt ist; wobei ein Bauteil nicht dann schon fehlerhaft ist, wenn ein Prüfergebnis des jeweiligen Merkmals das Stabilitätskriterium verletzt und noch innerhalb einer für das Merkmal definierten Toleranz liegt, sondern nur dann fehlerhaft ist, wenn das Prüfergebnis außerhalb der Toleranz liegt;
b) Herstellen der Bauteile und paralleles Durchführen des Prüfplans zur Erzeugung von Prüfergebnissen, wobei ausschließlich das mindestens eine Hauptmerkmal mit der ersten Prüffrequenz geprüft wird;
c) Auswerten der ermittelten Prüfergebnisse;
und, wenn mindestens ein Prüfergebnis für das mindestens eine Hauptmerkmal das Stabilitätskriterium verletzt,
d) Fortsetzen der Durchführung des Prüfplans, wobei zumindest auch das mindestens eine Nebenmerkmal automatisch geprüft wird;
wobei durch die Verletzung des Stabilitätskriteriums eine Prozessinstabilität des Produktionsprozesses erkannt und dann das mindestens eine Nebenmerkmal überprüft und damit der Produktionsprozess stärker überwacht wird, wobei parallel ein Eingriff in den Produktionsprozess durchgeführt wird, um die Prozessstabilität wiederherzustellen und um ein mögliches bevorstehendes Nichteinhalten der Toleranz zu verhindern; wobei, falls die Prüfergebnisse über einen definierten Zeitraum oder über eine bestimmte Anzahl von Stichproben oder Bauteilen hinweg das mindestens eine Stabilitätskriterium erfüllen, die Prüffrequenz zumindest des mindestens einen Nebenmerkmals reduziert wird; wobei die zweite Prüffrequenz geringer ist als die erste Prüffrequenz; .

2. Verfahren nach Patentanspruch 1, wobei bei der Steuerung eines Produktionsprozesses für Bauteile die erste Prüffrequenz eine Prüfung jedes Bauteils umfasst.

3. Verfahren nach einem der vorhergehenden Patentansprüche, wobei bei der Steuerung eines Produktionsprozesses für Bauteile zumindest das mindestens eine Hauptmerkmal während der Herstellung des Bauteils automatisiert geprüft wird.

4. Verfahren nach einem der vorhergehenden Patentansprüche, wobei zumindest eine Mehrzahl von Nebenmerkmalen vorliegt, wobei die Verletzung des Stabilitätskriteriums des mindestens einen Hauptmerkmals die Prüfung nur einer Auswahl der Nebenmerkmale bedingt.

5. Verfahren nach Patentanspruch 4, wobei eine Mehrzahl von Hauptmerkmalen vorliegt, wobei die Verletzung eines Stabilitätskriteriums eines Hauptmerkmals die Prüfung einer ersten Auswahl der Nebenmerkmale und die Verletzung eines Stabilitätskriteriums eines anderen Hauptmerkmals die Prüfung einer zweiten Auswahl der Nebenmerkmale bedingt.

6. Verfahren nach einem der vorhergehenden Patentansprüche, wobei die Verletzung eines Stabilitätskriteriums zumindest einen der folgenden Zustände umfasst:
• die Prüfergebnisse folgen einem Trend;
• die Prüfergebnisse schwanken innerhalb eines Intervalls, das durch das Stabilitätskriterium definierte Grenzwerte überschreitet;
• die Prüfergebnisse zumindest unterschiedlicher Hauptmerkmale weichen von einer vordefinierten Korrelation der Hauptmerkmale ab.

7. Verfahren nach einem der vorhergehenden Patentansprüche, wobei zumindest die erste Prüffrequenz verändert wird, wobei
• die erste Prüffrequenz gesteigert wird, wenn mindestens ein Prüfergebnis für das mindestens eine Hauptmerkmal das Stabilitätskriterium verletzt; oder
• die erste Prüffrequenz verringert wird, wenn sich eine bestimmte Anzahl von aufeinanderfolgenden Prüfergebnissen zumindest des mindestens einen Hauptmerkmals im Einklang mit dem Stabilitätskriterium befindet.

8. Verfahren nach einem der vorhergehenden Patentansprüche, wobei zumindest Hauptmerkmale durch ein Modell miteinander verknüpft sind, wobei anhand von Prüfergebnissen zumindest eines Hauptmerkmals auf eine Veränderung von anderen Hauptmerkmalen oder Nebenmerkmalen unter Berücksichtigung des Modells geschlossen wird; wobei eine Prüfung zumindest eines dieser Hauptmerkmale oder Nebenmerkmale initialisiert wird, sobald die Verletzung eines diesem Merkmal zugeordneten Stabilitätskriterium prognostiziert wird.

9. Verfahren nach Patentanspruch 8, wobei das Modell anhand der durchgeführten Prüfungen und der Prüfergebnisse fortlaufend validiert und verändert wird.

10. Verfahren nach einem der vorhergehenden Patentansprüche 8 und 9, wobei bei durch das Modell für die Auswahl des zusätzlich zu prüfenden Hauptmerkmals oder Nebenmerkmals zumindest einer der folgenden Faktoren berücksichtigt wird:
• Kosten der zusätzlichen Prüfung;
• Zeitaufwand der zusätzlichen Prüfung;
• Verfügbarkeit der erforderlichen Messeinrichtung.

11. Verfahren nach einem der vorhergehenden Patentansprüche, wobei bei der Steuerung eines Produktionsprozesses für Bauteile der Prüfplan für ein herzustellendes Bauteil während der Herstellung des Bauteils zumindest teilweise automatisiert erstellt wird, indem anhand von Prüfergebnissen von Merkmalen zumindest ein Hauptmerkmal und ein Nebenmerkmal identifiziert werden.

12. Verfahren nach Patentanspruch 11, wobei zur Validierung des Prüfplans zusätzlich zu der Prüfung des identifizierten zumindest einen Hauptmerkmals periodisch eine Mehrzahl von anderen Merkmalen geprüft wird.

## Claims

1. Method for controlling a production process for components, wherein at least the components or a manufacturing device used for producing the components have a multiplicity of metrologically detectable features, at least one feature being defined as a main feature and at least one further feature being defined as a secondary feature; having at least the following steps:
a) establishing a test plan for detecting at least one main feature and at least one secondary feature by tests, the at least one main feature being measured with a first test frequency and the at least one secondary feature being measured with a second test frequency; wherein at least one stability criterion is defined for the at least one main feature and the at least one secondary feature; wherein the stability criterion is established as a defined deviation from a setpoint value for the respective feature; wherein a component is not being considered to be defective if a test result of the respective feature violates the stability criterion but is still within a tolerance defined für that feature but is only considered defective once the test result is outside the tolerance;
b) producing the components and in parallel carrying out the test plan in order to generate test results, only the at least one main feature being tested with the first test frequency;
c) evaluating the test results which have been determined;
and, if at least one test result for the at least one main feature violates the stability criterion,
d) continuing to carry out the test plan, the at least one secondary feature at least also being tested automatically;
wherein by means of the violation of the stability criterion, a process instability of the production process is identified and then the at least one secondary feature is tested and the production process is therefore monitored more closely, wherein in parallel, an intervention in the production process is carried out in order to restore the process stability, so that a possible impending noncompliance with the tolerance is prevented; wherein, if the test results satisfy the stability criterion over a defined period of time or over a particular number of random samples or components, the test frequency for at least one secondary feature is reduced; wherein the second test frequency is lower than the first test frequency.

2. Method as claimed in claim 1, wherein in controlling a production process for components the first test frequency comprises testing of each component.

3. Method as claimed in one of the preceding claims, wherein in controlling a production process for components at least the at least one main feature is tested in an automated fashion during the production of the component.

4. Method as claimed in one of the preceding claims, wherein there are at least a multiplicity of secondary features, the violation of the stability criterion of the at least one main feature entailing the testing only of a selection of the secondary features.

5. Method as claimed in claim 4, wherein there are a multiplicity of main features, the violation of a stability criterion of one main feature entailing the testing of a first selection of the secondary features and the violation of a stability criterion of another main feature entailing the testing of a second selection of the secondary features.

6. Method as claimed in one of the preceding claims, wherein the violation of a stability criterion comprises at least one of the following states:
• the test results follow a trend;
• the test results fluctuate within an interval which exceeds limit values defined by the stability criterion;
• the test results of at least various main features deviate from a predefined correlation of the main features.

7. Method as claimed in one of the preceding claims, wherein at least the first test frequency is varied,
• the first test frequency being increased if at least one test result for the at least one main feature violates the stability criterion; or
• the first test frequency being reduced if a particular number of successive test results at least of the at least one main feature are in accordance with the stability criterion.

8. Method as claimed in one of the preceding claims, wherein at least main features are linked to one another by a model, a variation of other main features or secondary features being inferred with the aid of test results of at least one main feature by taking the model into account; wherein testing of at least one of these main features or secondary features is initialized as soon as the violation of a stability criterion assigned to this feature is prognosed.

9. Method as claimed in claim 8, wherein the model is validated and varied continuously with the aid of the tests carried out and the test results.

10. Method as claimed in one of the preceding claims 8 and 9, wherein at least one of the following factors is taken into account by the model for the selection of the main feature or secondary feature additionally to be tested:
• cost of the additional test;
• time expenditure of the additional test;
• availability of the required measuring device.

11. Method as claimed in one of the preceding claims, wherein in controlling a production process for components the test plan for a component to be produced is compiled at least partially in an automated fashion during the production of the component by identifying at least one main feature and one secondary feature with the aid of test results of features.

12. Method as claimed in claim 11, wherein in addition to the testing of the at least one main feature identified, a multiplicity of other features are periodically tested in order to validate the test plan.

## Revendications

1. Procédé de contrôle d'un processus de production de composants, dans lequel au moins les composants ou un équipement de fabrication utilisé pour fabriquer les composants présentent une pluralité de caractéristiques détectables par la métrologie, dans lequel au moins une caractéristique est définie comme caractéristique principale et au moins une autre comme caractéristique secondaire ; comprenant au moins les étapes suivantes :
a) définition d'un plan de test pour enregistrer au moins une caractéristique principale et au moins une caractéristique secondaire par des tests, la au moins une caractéristique principale étant mesurée avec une première fréquence de test et la au moins une caractéristique secondaire étant mesurée avec une deuxième fréquence de test ; dans lequel au moins un critère de stabilité est défini pour la au moins une caractéristique principale et la au moins une caractéristique secondaire ; dans lequel le critère de stabilité est défini comme un écart défini par rapport à une valeur de consigne pour la caractéristique respective ; dans lequel un composant n'est pas déjà défectueux si un résultat de test de la caractéristique respective viole le critère de stabilité et se trouve toujours dans une tolérance définie pour la caractéristique, mais n'est défectueux que si le résultat de test est en dehors de la tolérance ;
b) fabrication des composants et exécution parallèle du plan de test pour produire des résultats de test, en contrôlant uniquement au moins l'une des caractéristiques principales avec la première fréquence de test ;
c) évaluation des résultats de test déterminés ;
et si au moins un résultat de test pour la au moins une caractéristique principale viole le critère de stabilité,
d) poursuite de l'exécution du plan de test, en vérifiant automatiquement au moins la ou les caractéristiques secondaires ;
dans lequel une instabilité du processus de production est détectée par la violation du critère de stabilité, puis la au moins une caractéristique secondaire est vérifiée et le processus de production est ainsi davantage surveillé, une intervention dans le processus de production étant effectuée en parallèle afin de rétablir la stabilité du processus et d'éviter un éventuel non-respect imminent de la tolérance ; dans lequel, si les résultats des tests satisfont au moins un critère de stabilité sur une période de temps définie ou sur un certain nombre d'échantillons ou de composants, la fréquence d'essai d'au moins la au moins une caractéristique secondaire est réduite ; la deuxième fréquence d'essai étant inférieure à la première fréquence d'essai ;

2. Procédé selon la revendication 1, dans lequel lors de la commande d'un processus de production de composants, la première fréquence d'essai comprend un essai de chaque composant.

3. Procédé selon l'une quelconque des revendications précédentes, dans lequel lors de la commande d'un processus de production de composants, au moins la au moins une caractéristique principale est vérifiée automatiquement pendant la production du composant.

4. Procédé selon l'une quelconque des revendications précédentes, dans lequel au moins une pluralité de caractéristiques secondaires sont présentes, la violation du critère de stabilité d'au moins une caractéristique principale ne nécessitant l'examen que d'une sélection de caractéristiques secondaires.

5. Procédé selon la revendication 4, dans lequel il existe une pluralité de caractéristiques principales, dans lequel la violation d'un critère de stabilité d'une caractéristique principale nécessite l'examen d'une première sélection des caractéristiques secondaires et la violation d'un critère de stabilité d'une autre caractéristique principale nécessite l'examen d'une deuxième sélection des caractéristiques secondaires.

6. Procédé selon l'une quelconque des revendications précédentes, dans lequel la violation d'un critère de stabilité comprend au moins l'un des états suivants :
• les résultats des tests suivent une tendance ;
• les résultats des essais fluctuent dans un intervalle qui dépasse les valeurs limites définies par le critère de stabilité ;
• les résultats de test d'au moins différentes caractéristiques principales diffèrent d'une corrélation prédéfinie des caractéristiques principales.

7. Procédé selon l'une quelconque des revendications précédentes, dans lequel au moins la première fréquence d'essai est modifiée, dans lequel
• la première fréquence d'essai est augmentée si au moins un résultat d'essai pour la au moins une caractéristique principale viole le critère de stabilité ; ou
• la première fréquence d'essai est réduite si un certain nombre de résultats d'essai consécutifs d'au moins l'une des caractéristiques principales est conforme au critère de stabilité.

8. Procédé selon l'une quelconque des revendications précédentes, dans lequel au moins des caractéristiques principales sont liées les unes aux autres par un modèle, dans lequel on conclut à une modification d'autres caractéristiques principales ou caractéristiques secondaires en tenant compte du modèle sur la base des résultats d'essai d'au moins une caractéristique principale ; dans lequel un essai d'au moins une de ces caractéristiques principales ou caractéristiques secondaires est initialisé dès que la violation d'un critère de stabilité associé à cette caractéristique est prédite.

9. Procédé selon la revendication 8, dans lequel le modèle est validé et modifié en continu sur la base des tests effectués et des résultats des tests.

10. Procédé selon l'une quelconque des revendications précédentes 8 et 9, dans lequel au moins l'un des facteurs suivants est pris en compte par le modèle pour la sélection de la caractéristique principale ou de la caractéristique secondaire supplémentaire à vérifier :
• les coûts de l'examen complémentaire ;
• le temps nécessaire à l'examen supplémentaire ;
• la disponibilité de l'équipement de mesure requis.

11. Procédé selon l'une quelconque des revendications précédentes, dans lequel, lors de la commande d'un processus de production de composants, le plan de contrôle d'un composant à fabriquer est établi au moins partiellement de manière automatisée pendant la fabrication du composant en identifiant au moins une caractéristique principale et une caractéristique secondaire sur la base des résultats de contrôle des caractéristiques.

12. Procédé selon la revendication 11, dans lequel, pour valider le plan de test, une pluralité d'autres caractéristiques sont vérifiées périodiquement en plus de la vérification de la au moins une caractéristique principale identifiée.
